## Europäisches Patentamt

## European Patent Office

## Office européen des brevets

(11) Publication number: **0 067 387
B1**

(12) # EUROPEAN PATENT SPECIFICATION

(45) Date of publication of patent specification: **26.11.86**

(51) Int. Cl.⁴: **D 01 D 5/22,** D 01 D 5/08, D 01 F 6/60

(21) Application number: **82104938.4**

(22) Date of filing: **04.06.82**

(54) **Integrated process for the production of textured multifilament yarn.**

(30) Priority: **11.06.81 US 272820**

(43) Date of publication of application:
**22.12.82 Bulletin 82/51**

(45) Publication of the grant of the patent:
**26.11.86 Bulletin 86/48**

(84) Designated Contracting States:
**AT BE CH DE FR GB IT LI LU NL SE**

(56) References cited:
**FR-A-2 130 337
FR-A-2 447 984
US-A-4 096 226**

(73) Proprietor: **BASF CORPORATION
P.O. Drawer D
Williamsburg Virginia 23185 (US)**

(72) Inventor: **Donnelly, Edward Neil
Route 1 Evon Way
Anderson South Carolina 29261 (US)**
Inventor: **Haberkorn, Wilhelm A.
15 Mile Course
Williamsburg, VA. 23185 (US)**
Inventor: **Hagen, Gerry A.
Route 7 Box 85A
Anderson South Carolina (US)**
Inventor: **Postman, William
1902 Mill Gate Road
Anderson South Carolina 29621 (US)**
Inventor: **McGregor, Thomas Robert
Route 12 Box 2165
Anderson South Carolina 29621 (US)**

(74) Representative: **Weickmann, Heinrich, Dipl.-Ing.
et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 067 387**

**Description**

Background of the invention
Field of the invention
The present invention relates to the production of textured multifilament yarn.

Prior art background
Textured multifilament yarn was initially produced according to a procedure comprising three separate stages, viz., spinning, drawtwisting or draw-winding, and texturing. In the interest of increased efficiency and economy, as well as improved product quality, semi-integrated processes such as spin-draw-winding and draw-texturing were later developed. In today's market—where speed, efficiency, economy, and product quality must all be significantly enhanced in order to maintain a competitive position—a fully integrated spin-draw-texturing process is virtually a requirement for most producers. The present invention is an improved spin-draw-texturing process.

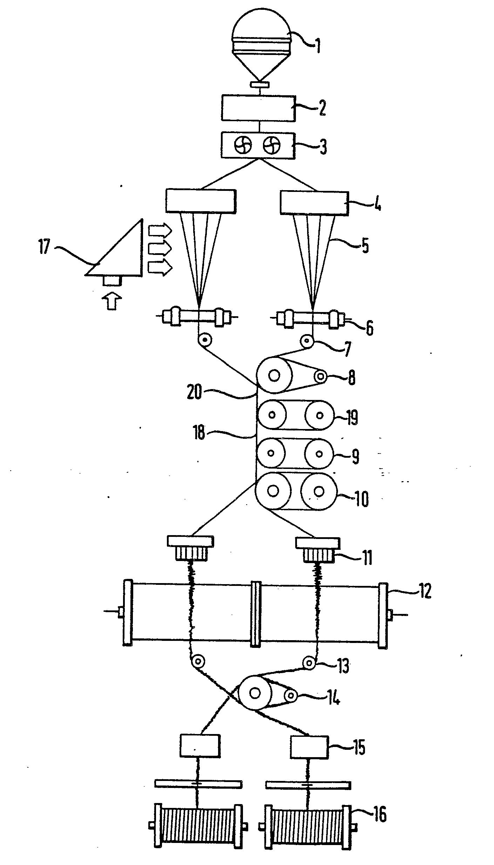

Statement of closest known prior art
The closest prior art of which the inventors are aware is set forth below.
1. U.S. 3,975,484, Okada, et al., relates to a process comprising melt spinning non-circular cross section polyamide filaments, which are allowed to cool, treated with a substantially non-aqueous oil, passed around a feed roll having a peripheral speed of more than about 200 meters per minute, passed in contact with a heated body through a contact angle between about 80° and about 160° with the surface temperature of the heated body maintained in the range of about 170°—250°C and with the radius of surface curvature in the range of about 15—75 mm. The filaments are thereby subjected to one-sided heating and drawing, passed around a heated draw roll having a peripheral speed of more than about 800 meters per minute and a surface temperature of less than about 220°C, whereupon they are passed through a steam jet crimper which is supplied with steam at a temperature in the range of about 200°—350°C. This detailed spin-draw-texturing process differs from the improvement which is the present invention in a number of significant aspects, the most notable being that the reference does not comprehend pre-tensioning the lubricated melt spun filaments beyond the elastic limit thereof at a temperature between about 20° and 60°C prior to the drawing thereof, and pre-heating the pretensioned filamentary polymeric material to a temperature between about 30 and 100°C prior to the drawing thereof.
2. U.S. 4,096,226, Martin, et al., relates to an integrated process for the continuous spinning, drawing, and texturing of polyamide filaments, in which the following steps are effected in immediate succession:
(a) melt spinning filaments of polyamide polymers at temperatures between 260° and 295°C at a spin-draw ratio of between 2:10 and 1:60;
(b) drawing the spun filaments on at least 2 forwarding elements, the initial element having a surface temperature between 50° and 120°C and the final element having a surface temperature between 80° and 350°C, at a draw ratio such that the drawn filament, on leaving the drawing stage, has an extensibility of between 10 and 50 percent; and
(c) texturing the drawn filaments at a velocity of between 800 and 3,000 meters per minute by an air jet process wherein the overfeed in the texturing stage is from 10 to 50 percent, and the filament temperature, prior to texturing, is between 50° and 180°C. This process comprises also the following steps: lubricating the filaments by a lubricating composition after melt spinning and cooling and pre-heating the filaments to a temperature between 30 and 100°C prior to the drawing step. Not comprehended in this reference is the requirement in the present invention that the following cooperative combination of steps must be employed:
(a) Lubricating the filamentary polymeric material from the melt spinning step by applying thereto a lubricating composition comprising (1) a lubricant and (2) a solvent in an amount of from 0 to 90 percent by weight of the lubricating composition;
(b) Pre-tensioning the lubricated melt spun filamentary polymeric material beyond its elastic limit at a temperature between about 20 and 60°C prior to the drawing thereof.
3. U.S. 3,939,639, Ellegast, relates to a continuous process for the production of textured multifilament yarns from synthetic thermoplastic high molecular weight polymers by spin-draw-texturing, wherein the unstretched multifilament yarn is directed from the spinning phase to the draw-texturing phase through tubes made of metal, plastics, glass, or ceramics. Nowhere taught or suggested in this reference is the requirement in the present invention that the following cooperative combination of steps must be employed:
Pre-tensioning the lubricated melt spun filamentary polymeric material beyond its elastic limit at a temperature between about 20 and 60°C prior to the drawing thereof; followed by
Pre-heating the pre-tensioned filamentary polymeric material to a temperature between about 30 and 100°C prior to the drawing thereof.
4. U.S. 3,854,177, Breen, et al., relates to a process and apparatus for texturing continuous multifilament yarn at high speeds to increase the bulk thereof. A stream of hot compressible fluid is jetted to form a turbulent region, into which the filamentary yarn is passed. The filamentary yarn is removed from the fluid stream by means of a foraminous surface, whereupon it is cooled with fluid on the foraminous

2

surface to set the crimp prior to the imposing of any substantial tension thereon. In Fig. 3; in Col. 3, lines 64—68; and in Col. 4, line 66 to Col. 5, line 11, reference is briefly made to an integrated spin-draw-texturing process. However, nowhere is it taught or suggested that the following cooperative combination of procedural steps which is the improvement of the present invention, should be followed:

(a) Lubricating the filamentary polymeric material from the melt spinning step by applying thereto a lubricating composition comprising (1) a lubricant and (2) solvent in an amount of from 0 to 90 percent by weight of the lubricating composition;

(b) Pre-tensioning the lubricated melt spun filamentary polymeric material beyond its elastic limit at a temperature between about 20 and 60°C prior to the drawing thereof; followed by

(c) Pre-heating the pre-tensioned filamentary polymeric material to a temperature between about 30 and 100°C prior to the drawing thereof.

Summary of the invention

The primary object of the present invention is to provide an improvement in the prior art process for the production of textured multifilament yarn from a fiber-forming, thermoplastic, linear, high-molecular-weight polymer by the combination in immediate succession of the procedural steps of melt spinning, drawing, texturing and packaging. The improvement which is the present invention comprises the cooperative combination of the following three procedural steps with those of melt spinning, drawing, texturing and packaging:

(a) Lubricating the filamentary polymeric material from the melt spinning step by applying thereto a lubricating composition comprising (1) a lubricant and (2) solvent in an amount of from 0 to 90 percent by weight of the lubricating composition;

(b) Pre-tensioning the lubricated melt spun filamentary polymeric material beyond its elastic limit at a temperature between about 20 and 60°C prior to the drawing thereof; followed by

(c) Pre-heating the pre-tensioned filamentary polymeric material to a temperature between about 30 and 100°C prior to the drawing thereof.

All three procedural steps of the instant improvement are essential. When the improvement is employed, the result is a quality yarn, which is characterized by an insignificant number of broken filaments, and excellent physical properties, such as tenacity, elongation, dyeability, and crimp contraction. Moreover, a very low variance in these yarn characteristics is obtained. As a consequence, the yarn produced by the process of the present invention is eminently suitable for use in the fabrication of carpets, employing standard procedures well-known in the art. When one or more of the three procedural steps of the instant improvement are not employed, a quality yarn is not produced, as evidenced by a significant number of broken filaments, and less than excellent physical properties, such as tenacity, elongation, dyeability, and crimp contraction. Moreover, a wide variance in these yarn characteristics is obtained. Consequently, the yarn so produced which is characteristic of the prior art processes, is not always suitable for use in the fabrication of carpets, employing standard procedures well-known in the art.

Brief description of the drawing

For a more complete understanding of the present invention, including its primary object and benefits, reference should be made to the Detailed Description of the Preferred Embodiments, which is set forth below. This detailed description should be read together with the accompanying drawing, which schematically depicts certain preferred embodiments according to the improved process which is the present invention.

Detailed description of the preferred embodiments

Referring now to the drawing, a number of particularly preferred embodiments according to the present invention are shown. Supply tank 1 contains the fiber-forming, thermoplastic, linear, high-molecular-weight polymer to be spun, preferably in chip form. This polymer is preferably a polyamide, and most advantageously polycaprolactam. The polymer from supply tank 1 is melted in a standard melt extruder 2, whereupon the molten polymer is directed into a metering pump, preferably two metering pumps 3, as shown in the drawing, which pumps are readily available commercially. Metering pumps 3 cause two polymer streams to pass individually into separate standard spinnerette packs 4, whence each individual polymer stream is spun through a spinnerette having the desired number of holes of a chosen shape to form molten filamentary polymeric strands 5. Before entering the spinnerette holes, each polymer stream has been filtered, as is generally employed and well understood by those of skill in the art. The particular temperature for the polymer in spinnerette packs 4 depends upon the actual molecular weight of the polymer, as is well known by those of skill in the art.

Molten filamentary polymeric strands 5 are quenched by means of standard quench cabinet 17, which provides a flow of transversely moving cooling gas, especially air, as shown by the arrows. The two groups of solidified filamentary polymeric strands are then individually configured in separate close-packed, essentially monofilamentary layers, to each of which a lubricating composition is applied by means of finish applicators 6. The lubricating composition applied comprises a lubricant, and solvent (especially water) in an amount of from 0 to 90 percent by weight of the lubricating composition. The finish applicators are any of a number of those known by the skilled artisan, e.g., those described in U.S. Patent No.

3,893,412. Guides 7 are employed to separately direct the individual lubricated multifilament groups around a standard, commercially-available pre-tensioning godet and separator roll 8. In one embodiment of the invention, the multifilament groups 20, which have been straightened at ambient temperatures below the elastic limit thereof, are passed around storage rolls 19, which afford a means for providing a residence time of between about 1 and 5 seconds for the straightened filamentary polymeric material.

Storage rolls 19, which are large, unheated, standard godets travelling at a low rate of speed, provide that residence time which is sufficient to allow moisture migration to occur within the filamentary polymeric material, in order to ensure that subsequent drawing thereof can be accomplished without breakage of the filaments. Such a residence time is necessary when the lubricating composition contains solvent (especially water) in an amount of from about 50 to 90 percent by weight of the lubricating composition. Such a residence time is not necessary when the lubricating composition contains only the lubricant, or lubricant and solvent (especially water) in an amount of less than about 50 percent by weight of the lubricating composition. Under the latter conditions, the multi-filament groups 18 from the pre-tensioning godet and separator roll 8 bypass the storage rolls 19, and having been pre-tensioned beyond the elastic limits thereof at ambient temperatures, they are pre-heated and then drawn, for example, between a first set of standard heated drawrolls 9 and a second set of standard heated drawrolls 10 as shown in the drawing.

The two individual multifilament groups, or threadlines, are then directed to separate texturing units 11, in order to produce a bulky multifilament yarn, which is discharged in crimped form onto commercially, available cooling belts 12. The texturing units are preferably fluid jet texturing units well-known to those of skill in the art and exemplified by those described in U.S. Patents 3,714,686, 3,908,248 and 3,950,831. The textured yarn, which at this point has a degree of entanglement, is removed from cooling belts 12 by means of standard takeaway godet 14 and guides 13, and is, in one embodiment, directed immediately to fluid interlacing jets 15, which provide further entanglement of the individual filaments as desired. If no further entanglement is necessary or desired, the textured yarn is caused to bypass interlacing jets 15, passing directly to standard, commercially, available take-up winders 16, by means of which the yarn is wound into packages for subsequent use or sale. The fluid interlacing jets employed are any of a number of those well-known to the skilled artisan, such as those described in U.S. Patents 3,115,691 and 3,125,793.

All of the procedural steps specified hereinabove are accomplished in immediate succession, thereby affording an integrated process, wherein all steps combine cooperatively to give the desired result.

As outlined above, filamentary polymeric material from the melt spinning step is first cooled and then lubricated by applying thereto a lubricating composition comprising (a) a lubricant and (b) solvent in an amount of from 0 to 90 percent by weight of the lubricating composition. This lubricated, melt-spun filamentary polymeric material is then pre-tensioned beyond its elastic limit at a temperature between about 20 and 60°C, after which it is pre-heated to a temperature between about 30 and 100°C before being drawn.

Especially advantageous results are obtained when the solvent employed in the lubricating composition is water in an amount sufficient to provide up to about 50 percent by weight of the lubricating composition. The same advantageous results are obtained if no solvent is present. viz., if the lubricant is applied in neat form. Under those conditions, the pre-heating of the pretensioned filamentary polymeric material is beneficially accomplished at a temperature between about 35 and 70°C prior to the drawing step. Moreover, these conditions are especially desirable when the fiber-forming, thermoplatic, linear, high-molecular-weight polymer is a polyamide, particularly polycaprolactam.

When polycaprolactam is employed, the very best results are achieved if the lubricant is a member selected from the group consisting of polyalkoxylated alcohols, thiols, acids, and phenols, and water is present in the lubricating composition in an amount of 0.1 to 50 percent by weight of the lubricating composition. Moreover, it is desirable to apply the lubricating composition uniformly over the width and along the length of the filamentary polymeric material so that a level of from 0.2 to 3 percent by weight of lubricant, based on the weight of the polymer, is achieved. Such uniform application is achieved by means of devices such as those described in U.S. Patent No. 3,893,412. The polyalkoxylated alcohols and thiols are of the type described in U.S. Patent No. 4,111,818; the polyalkoxylated acids are of the type described in U.S. Patent No. 4,110,227; and the polyalkoxylated phenols are of the type described in U.S. Patent No. 2,674,619. Equally beneficial results are achieved if water is present in the lubricating composition in an amount of 0.1 to 10 percent by weight of the lubricating composition, and the lubricant is a member of the group consisting of polyalkoxylated alcohols (as specified above), polyalkoxylated thiols (as specified above), polyalkoxylated acids (as specified above), polyalkoxylated phenols (as specified above), vegetable triglycerides (such as coconut oil), polyalkoxylated adducts of natural and synthetic esters of glycerol (such as glycerol monolaurate ethoxylated with 23 moles of ethylene oxide by standard techniques well-known to those of skill in the art), and phosphate antistatic agents (such as those available under the designation G-2200 from ICI Americas, Inc.).

When the lubricating composition which is applied to the solidified filaments from the melt spinning step contains solvent, especially water, in an amount of from 50 to 90 percent by weight of the lubricating composition, the lubricated filamentary polymeric material is first straightened below the elastic limit thereof, as described hereinabove, after which a residence time is provided for the straightened filamentary polymeric material prior to pre-tensioning thereof at essentially ambient temperatures beyond the elastic

4

limits thereof followed by pre-heating of the pre-tensioned filamentary polymeric material to a temperature between about 60 and 100°C. Whereas a residence time of 0.5 seconds or less has been shown to be unsatisfactory, a residence time of from 1—5 seconds has been shown to be sufficient to afford moisture migration within the filamentary polymeric material, whereby subsequent drawing thereof can be accomplished without breakage of the individual filaments. These conditions are especially applicable when the fiber-forming, linear, high-molecular-weight polymer is polycaprolactam. As described hereinabove with particular reference to the drawing, this residence time is conveniently provided by means of storage rolls 119, which are standard, unheated godets travelling at a low speed.

When the fiber-forming, thermoplastic, linear, high-molecular weight polymer employed is polycaprolactam, the melt spinning through the spinnerette holes in spinnerette pack 4 referred to above is advantageously carried out at a temperature between about 240 and 290°C, whereby individual melt spun filaments are produced having a modification ratio of from 1 to 4, as understood by those of skill in the art, at a polymer throughput of 0.2 to 0.4 grams/minute×(textured dtex×number of threadlines employed). The filaments are advantageously quenched by means of air at a temperature between about 5 and 25°C and a relative humidity between about 20 and 90 percent. The residence time of polymer in spin duct is beneficially between about 0.1 to 1 seconds.

When polycaprolactam is employed as the fiber-forming, thermoplastic, linear, high molecular weight polymer, the pre-tensioning subsequent to application of the lubricating composition is beneficially carried out at essentially ambient conditions by stretching the polycaprolactam filaments between about 1 and 5 percent of the length thereof, and, most preferably between about 1 and 2 percent of the length thereof. These conditions appertain when solvent, especially water was present in the applied lubricating composition in an amount of 0 to 50 percent, or in an amount of 50 to 90 percent.

Moreover, when the fiber-forming, thermoplastic, linear, high-molecular-weight polymer employed is polycaprolactam, the filamentary polymeric material which has been pre-tensioned as described in detail immediately above is advantageously drawn by first ensuring that the filamentary polymeric material is at a temperature between about 35 and 70°C, and most preferably between about 40 and 60°C, whereupon the filamentary polymeric material is stretched in a single zone at a draw ratio of from about 1.5 to 4, and most preferably between about 2.5 to 4, followed by heating the stretched filamentary polymeric material to a temperature between about 120 and 200°C and most preferably between about 140 and 180°C. Under such conditions it is especially beneficial if the elapsed time between the conclusion of the lubrication step and the conclusion of the drawing step is between about 0.1 and 2 seconds.

However, if the pre-tensioned filamentary polymeric material is lubricated with a lubricating composition which comprised solvent, especially water in an amount of from 50 to 90 percent by weight of the lubricating composition, drawing is most advantageously accomplished by first ensuring that the pre-tensioned filamentary polymeric material is brought to a temperature between about 60 and 100°C, and most preferably between about 80 and 100°C, whereupon the filamentary polymeric material is stretched in a single zone at a draw ratio of from about 1.5 to 4, and most preferably between about 2.5 to 3.5. Thereupon the stretched filamentary polymeric material is heated to a temperature between about 120 and 200°C, and most preferably between about 140 and 180°C. Under such conditions it is especially beneficial if the elapsed time between the conclusion of the lubrication step and the conclusion of the drawing step is between about 1 and 7 seconds.

At the conclusion of the drawing step, texturing of the drawn filamentary polymeric material is conveniently and advantageously accomplished by fluid jet means. For this purpose, devices such as those described in U.S. Patents 3,714,686 and 3,908,248 have been found to be especially advantageous. When polycaprolactam is the fiber-forming, thermoplastic, linear, high-molecular-weight polymer, fluid temperatures between about 200 and 450°C are utilized at a flow rate of 15 normal cubic meters per hour or less. Under such conditions, both texturing and interlacing of the filamentary polymeric material are effected simultaneously. The textured (and interlaced) filamentary polymeric material is immediately cooled by means of a fluid to a temperature of less than about 50°C without any stress on the filaments, while they are kept in an essentially tensionless state on cooling belts or the like, as outlined hereinabove. Thereupon the cooled textured (and interlaced) filamentary polymeric material is wound into a package by standard means, for subsequent utilization or sale. Convenience and efficacy are the results when the texturing and cooling fluids are air, and when the texturing process is accomplished with a plurality of threadlines, each entering the fluid texturing device at a linear velocity greater than 200 meters per minute, and wherein the individual threadlines have a weight to length ratio of between about 500 and 3000 dtex.

If texturing devices other than those referred to above are employed, or if texturing conditions are utilized which result in little, or effectively no interlacing, or if an enhanced degree of interlacing is required or desired for any purpose, a separate interlacing step may be employed following the conclusion of the texturing operation. Such interlacing is effectively accomplished by the utilization of any of a number of fluid jet interlacing means known to those of skill in the art, such as those devices described in U.S. Patents 3,115,691 and 3,125,793, among many others. In this embodiment the textured filamentary polymeric material is passed through the fluid jet means after cooling of the textured filamentary polymeric material to a temperature of less than about 50°C has been effected without stress on the individual filaments, which are kept in an essentially tensionless state on cooling belts or the like, as outlined hereinabove.

5

**0 067 387**

Resulting from especially preferred embodiments of the process of the present invention as described above is a textured multifilament yarn having the following characteristics:

| | |
|---|---|
| Tenacity (grams/dtex) | 2.1—2.9 |
| Elongation (percent) | 35—60 |
| Boiled shrinkage (percent) | 2—6 |
| Crimp contraction (employing hot air at 150°C (percent)) | 10—18 |
| Bulk (boiled) (percent) | 7—15 |
| Broken filaments/km | 0—0.5 |

The following examples, which are not limiting but illustrative only, provide a more complete understanding of the present invention, including its primary benefits and advantages over the prior art.

Example 1 (This invention)

This example illustrates the use of pre-tensioning and low pre-heat prior to drawing when an essentially non-aqueous finish is used. Nylon-6 chips having a relative viscosity of 2.69 as measured in 96—98% sulfuric acid and containing less than 0.01% titanium dioxide were melted in an extruder and spun at a temperature of 270°C through two spinnerettes with 68 irregular shaped holes each at a thruput of 230 grams per minute per spinnerette [(0.161 grams per minute×textured dtex×number of threadlines)=(0.161×1430 dtex×2)=460] forming two 68 filament threadlines. The spun filaments were quenched with a cross flow of air at approximately 12°C, were lubricated with a non-aqueous spin finish of the polyalkoxylated acid group and were wrapped around an ambient pre-tensioning godet that established a spinning speed of 645 meters per minute. The threadlines were pre-tensioned, at levels ranging from 0.039 pond/dtex to 0.238 pond/dtex representing a stretch of 0.5% to 2.0% respectively, by establishing a differential speed between the pre-tensioning godet and a first heated godet pair. The pre-tensioned threadlines were heated on the first godet pair at levels of 35, 45, and 55°C, and were immediately drawn in a single zone to a speed of 2000 meters per minute by wrapping the threadlines around a second heated godet pair. The quality of the drawn threads was evaluated by monitoring the number of broken filaments generated at each of the pre-tension and first godet temperature levels followed by physical property analysis. The following table clearly shows the advantages of pre-tensioning and low temperature pre-heating:

| Pre-tension level G/dtex (%stretch) (based on spun, undrawn dtex) | Pre-heat tempera- ture °C | Broken fila- ments per minute per threadline | Fiber tenacity G/dtex | Fiber elongation at break (%) |
|---|---|---|---|---|
| 0.039 (0.5%) | 35 | 15.0 | 3.12 | 35.2 |
| 0.238 (2.0%) | 35 | 0.8 | 3.28 | 36.7 |
| 0.039 (0.5%) | 45 | 1.6 | 3.19 | 36.5 |
| 0.238 (2.0%) | 45 | 0.1 | 3.42 | 37.3 |
| 0.039 (0.5%) | 55 | 2.7 | 3.22 | 38.3 |
| 0.238 (2.0%) | 55 | 0.0 | 3.38 | 38.3 |

Note:

Less than 0.3 broken filaments per minute per threadline is considered acceptable.

Example 2 (Not this invention—For comparative purposes)

The example illustrates the unsatisfactory fiber properties obtained when high water content finish, no pre-tension, and normal pre-heat conditions are used.

Nylon-6 chips having a relative viscosity of 2.69 as measured in 96—98% sulfuric acid and containing 0.3% titanium dioxide were melted in an extruder and spun at a temperature of 251°C through a spinnerette with 136 irregular shaped holes at a thruput of 415 grams per minute forming a 136 filament threadline. The spun filaments were quenched with a crossflow of air at approximately 10°C, were lubricated with a 16.5% oil in water emulsion with an oil in the triglyceride group, and were wrapped around a first heated godet

6

pair rotating at a speed of 500 meters per minute. Runnable drawing performance could not be achieved until the first godet pair was at a temperature above 120°C, which is in the normal range for the discontinuous process. Drawing was accomplished at temperatures of 120 to 150°C at a draw ratio of 3.5×. The following table illustrates that at best only poor drawing performance was achieved and the fiber physical properties of tenacity and elongation are characteristic of a marginally acceptable pre-textured fiber.

| Pre-heat temperature °C | Broken filaments per minute | Fiber tenacity G/dtex | Fiber elongation at break (%) |
|---|---|---|---|
| 120 | 26.0 | 3.09 | 52.0 |
| 130 | 2.0 | 3.27 | 58.5 |
| 140 | 1.4 | 2.64 | 49.3 |
| 150 | 1.8 | 2.45 | 46.2 |

Example 3 (This invention)

This example illustrates the effects of water in finish and how excellent tenacity and elongation with low broken filaments are obtained.

Nylon-6 chips having a relative viscosity of 2.69 as measured in 96—98% sulfuric acid and containing less than 0.01% titanium dioxide were melted in an extruder and spun at a temperature of 270°C through two spinnerettes with 68 irregular shaped holes each at a thruput of 235 grams per minute per spinnerette forming two 68 filament threadlines. The spun filaments were quenched with a crossflow of air at approximately 12°C, and were lubricated with an oil spin finish of the alkoxylated alcohol group than contained varying levels of water from essentially 0 to 30%. The fiber was stretch pre-tensioned 2%, pre-heated to 60°C, and stretched 3.35× to a speed of 2000 meters per minute. The fiber finished with 30% water exhibited good tenacity and elongation, 4.2 g/dtex and 34.5%, but unacceptable broken filament performance—0.9 filament breaks per minute. The fiber finished without water exhibited good tenacity and elongation as well as a good low break frequency—4.1 g/dtex at 34.5% elongation and 0.2 filament breaks per minute.

Example 4 (This invention)

This example describes one possible operational condition of the process and its high productivity level.

Nylon-6 chips having a relative viscosity of 2.69 as measured in 96—98% sulfuric acid and containing less than 0.01% titanium dioxide were melted in an extruder and spun at a temperature of 265°C through two spinnerettes with 99 irregular shaped holes each at a thruput of 335 grams per minute per spinnerette forming two 99 filament threadlines. The spun filaments were quenched with a crossflow of air at approximately 12°C, and were lubricated with an oil spin finish of the polyalkoxylated alcohol group that contained essentially no water. The fiber was stretch pre-tensioned 1-1/2%, pre-heated to 45°C, and stretched 3.25× to a speed of 2119 meters per minute and heated to 165°C. The stretched threadlines were crimped in a hot air texturizer such as that in U.S. Patent 3,908,248 and deposited onto a rotating cooling sieve through which air was moved by means of a vacuum. The sieve moved at a velocity of 45 meters per minute. The threadlines were unravelled from their plug form on the cooling sieve to a speed of 1732 meters per minute established by a cold pair of godets. The yarns were subsequently interlaced in a conventional air jet and wound up under 200 pond tension on a double cup winder.

Some of the fiber produced was processed in a commercial space dyeing operation and exhibited excellent uniformity and bulk/cover. Other fiber was commercially cabled, continuously heatset, tufted, and dyed into an excellent residential type carpet.

The fiber exhibited physical properties common to Bulked Continuous Filament (BCF) products including:

| | |
|---|---|
| Dtex: | 1990 |
| Tenacity: | 2.3 g/dtex |
| Elongation at Break: | 40% · |
| Tank Bulk in Hot Water*: | 10.2% |
| Dyeability: | Piece dyeable in Acid Red; absence of noticeable streaks in Ortalon Blue G |

*Tank Bulk was determined by measuring the length change in a skein of fiber exposed to boiling water under two loads of approximately 0.0003 g/dtex ($L_2$) and 0.09 g/dtex ($L_1$), respectively. Bulk was calculated by the following equation:

$$\% \ Bulk = \frac{L_1 - L_2}{L_1} \times 100$$

**Claims**

1. Integrated process for the production of textured multifilament yarn from a fiber-forming, thermoplastic, linear, high-molecular-weight polymer by the combination in immediate succession of the procedural steps of melt spinning, drawing, texturing and packaging comprising the cooperative combination of the following procedural steps with those of melt spinning, drawing, texturing and packaging: lubricating the filamentary polymeric material from the melt spinning step and pre-heating the filamentary polymeric material to a temperature between about 30 and 100°C prior to the drawing thereof, characterized in applying to the filamentary polymeric material from the melt spinning step a lubricating composition comprising a lubricant and a solvent in an amount of from 0 to 90 percent by weight of the lubricating composition and pre-tensioning the lubricated melt spun filamentary polymeric material beyond its elastic limit at a temperature between about 20 and 60°C prior to the drawing thereof.

2. The process of claim 1, wherein the solvent is water in an amount of from 0 to 50 percent by weight of the lubricating composition, and the pre-heating of the pre-tensioned filamentary polymeric material is accomplished at a temperature between about 35 and 70°C prior to the drawing step.

3. The process of claim 2, wherein the fiber-forming, thermoplastic, linear, high-molecular-weight polymer is a polyamide.

4. The process of claim 3, wherein the polyamide is polycaprolactam.

5. The process of claim 4, wherein the lubricating composition is applied uniformly over the width and along the length of the melt spun filamentary polymeric material so that a level of from 0.2 to 3 percent by weight of lubricant, based on the weight of the polymer, is achieved.

6. The process of claim 4, wherein the lubricant is a member selected from the group consisting of polyalkoxylated alcohols, thiols, acids, and phenols, and water is present in an amount of from 0.1 to 50 percent by weight of the lubricating composition.

7. The process of claim 4, wherein the lubricant is a member of the group consisting of polyalkoxylated alcohols, polyalkoxylated thiols, polyalkoxylated acids, polyalkoxylated phenols, vegetable triglycerides, polyalkoxylated adducts of natural and synthetic esters of glycerol, and phosphate antistatic agents, and water is present in an amount of 0.1 to 10 percent by weight of the lubricating composition.

8. The process of claim 1, which comprises the following cooperative procedural steps:

(a) lubricating the filamentary polymeric material from the melt spinning step by applying thereto a lubricating composition comprising (1) a lubricant and (2) water in an amount of from 50 to 90 percent by weight of the lubricating composition;

(b) Straightening the filamentary polymeric material below the elastic limit thereof;

(c) Providing a residence time of between about 1 and 5 seconds for the straightened filamentary polymeric material; followed by

(d) Pre-tensioning the filamentary polymeric material at ambient temperatures beyond the elastic limit thereof; and

(e) Pre-heating the pre-tensioned filamentary polymeric material to a temperature between about 60 and 100°C.

9. The process of claim 8, wherein the fiber-forming, thermoplastic, linear, high-molecular-weight polymer is polycaprolactam.

10. The process of claim 9, wherein the residence time of between about 1 and 5 seconds subsequent to the straightening step and prior to the pre-tensioning step is provided by means of a storage roll positioned downstream of the means for applying the lubricating composition.

11. The process of either claim 4 or claim 10, wherein the melt spinning is carried out at a temperature between about 240 and 290°C, to produce individual melt spun filaments having a modification ratio of from 1 to 4, at a polymer throughput of 0.1 to 0.4 grams/minute×(textured dtex×number of threadlines employed), the filaments being quenched in air at a temperature between about 5 and 25°C and a relative humidity between about 20 and 90 percent, wherein the residence time in the spin duct is between about 0.1 and 1 seconds.

12. The process of either claim 4 or claim 10, wherein the pre-tensioning is carried out at essentially ambient conditions by stretching the lubricated polycaprolactam filaments between about 1 and 5 percent of the length thereof.

13. The process of claim 12, wherein the lubricated polycaprolactam filaments are pre-tensioned by stretching thereof between about 1 and 2 percent of the length thereof.

14. The process of claim 4, wherein the pre-tensioned filamentary polymeric material is drawn by:
(a) Ensuring that the filamentary polymeric material is at a temperature between about 35 and 70°C;
(b) Stretching the filamentary polymeric material in a single zone at a draw ratio of from about 1.5 to 4: followed by
(c) Heating the stretched filamentary polymeric material to a temperature between about 120 and 200°C; wherein the elapsed time between the conclusion of the lubricating step and the conclusion of the drawing step is between about 0.1 and 2 seconds.

15. The process of claim 10, wherein the pre-tensioned filamentary polymeric material is drawn by:
(a) Ensuring that the filamentary polymeric material is at a temperature between about 60 and 100°C;
(b) Stretching the filamentary polymeric material in a single zone at a draw ratio of from about 1.5 to 4; followed by
(c) Heating the stretched filamentary polymeric material to a temperature between about 120 and 200°C; wherein the elapsed time between the conclusion of the lubricating step and the conclusion of the drawing step is between about 1 and 7 seconds.

16. The process of claim 14, wherein the filamentary polymeric material is at a temperature between about 40 and 60°C immediately prior to stretching.

17. The process of claim 15, wherein the filamentary polymeric material is at a temperature between about 80 and 100°C immediately prior to stretching.

18. The process of either claim 16 or claim 17 wherein the filamentary polymeric material is stretched in a single zone at a draw ratio between 2.5 and 3.5.

19. The process of claim 18, wherein the stretched filamentary polymeric material is heated to a temperature between about 140 and 180°C prior to texturing.

20. The process of either claim 4 or claim 10, wherein texturing is accomplished by fluid jet means at a fluid temperature between about 200 and 450°C, employing a fluid flow rate of less than 15 normal cubic meters per hour; whereupon the textured filamentary polymeric material is cooled by means of a fluid to a temperature of less than about 50°C without stress, while the filaments are in an essentially tensionless state, and then wound into a package for subsequent utilization.

21. The process of claim 20, wherein the texturing and cooling fluids are air.

22. The process of claim 20, wherein the fluid jet means effects texturing and interlacing of the filamentary polymeric material simultaneously.

23. The process of claim 20 which additionally comprises fluid jet means for the subsequent interlacing of the textured filamentary polymeric material, after cooling thereof to a temperature of less than about 50°C has been effected without stress while the filaments are in an essentially tensionless state.

24. The process of either claim 4 or claim 10, which process is accomplished with a plurality of threadlines each entering the texturing device at a linear velocity of greater than 2000 meters/minute, and wherein the individual threadlines have a weight to length ratio of between about 500 and 3000 dtex.


**Patentansprüche**

1. Integriertes Verfahren zur Herstellung von texturiertem Multifilamentgarn aus einem faserbildenden, thermoplastischen, linearen, hochmolekularen Polymer, durch die Kombination der sofort hintereinander ablaufenden Verfahrensschritte des Schmelzspinnens, Streckens, Texturierens und Packens, umfassend die gemeinsame Kombination der folgenden Verfahrensschritte mit denjenigen des Schmelzspinnens, Streckens, Texturierens und Packens: Schmieren des Filamentpolymermaterials vom Schritt des Schmelzspinnens und Vorheizen des Filamentpolymermaterials auf eine Temperatur zwischen etwa 30 und 100°C vor dessen Strecken, dadurch gekennzeichnet, daß auf das Filamentpolymermaterial vom Schritt des Schmelzspinnens eine schmierende Zusammensetzung aufgetragen wird, umfassend ein Schmiermittel und ein Lösungsmittel in der Menge von 0 bis 90 Gew.-%, bezogen auf die schmierende Zusammensetzung und Vorspannen des geschmierten, schmelzgesponenen Filamentpolymermaterials über seine Elastizitätsgrenze hinaus bei einer Temperatur zwischen etwa 20 und 60°C vor dessen Strecken.

2. Verfahren nach Anspruch 1, in dem als Lösungsmittel Wasser in einer Menge von 0 bis 50 Gew.-%, bezogen auf das Gewicht der schmierenden Zusammensetzung, verwendet wird und das Vorheizen des vorgespannten Filamentpolymermaterials bei einer Temperatur zwischen etwa 35 und 70°C vor dem Strecken durchgeführt wird.

3. Verfahren nach Anspruch 2, in welchem das faserbildende, thermoplastische, lineare, hochmolekulare Polymer ein Polyamid ist.

4. Verfahren nach Anspruch 3, in welchem das Polyamid Polycaprolactam ist.

5. Verfahren nach Anspruch 4, in welchem die schmierende Zusammensetzung gleichförmig über die Weite und Länge des schmelzgesponnenen Filamentpolymermaterials dermaßen angewendet wird, daß der Gehalt an Schmiermittel zwischen 0,2 und 3 Gew.-% liegt, bezogen auf das Gewicht des erhaltenen Polymers.

6. Verfahren nach Anspruch 4, in welchem das Schmiermittel ausgewählt ist aus der Gruppe, bestehend aus polyalkoxilierten Alkoholen, Thiolen, Säuren und Phenolen und daß der Wassergehalt 0,1 bis 50 Gew.-%, bezogen auf die schmierende Zusammensetzung, beträgt.

7. Verfahren nach Anspruch 4, in welchem das Schmiermittel ausgewählt ist aus der Gruppe, bestehend aus polyalkoxylierten Alkoholen, polyalkoxylierten Thiolen, polyalkoxylierten Säuren, polyalkoxylierten Phenolen, pflanzlichen Triglyceriden, polyalkoxylierten Addukten von natürlichen und synthetischen Estern von Glycerol und phosphatantistatische Agentien und der Wassergehalt zwischen 0,1 und 10 Gew.-%, bezogen auf die schmierende Zusammensetzung beträgt.

8. Verfahren nach Anspruch 1, umfassend die folgenden gemeinsamen Verfahrensschritte:

(a) Schmieren des Filamentpolymermaterials vom Schritt des Schmelzspinnens durch Anwenden einer schmierenden Zusammensetzung darauf, umfassend (1) ein Schmiermittel und (2) Wasser in einer Menge von 50 bis 90 Gew.-%, bezogen auf die schmierende Zusammensetzung,

(b) Ausrichten des Filamentpolymermaterials unter dessen Elastizitätsgrenze,

(c) Bereitstellen einer Verweilzeit von 1 bis 5 sec. für das ausgerichtete Filamentpolymermaterial, gefolgt von

(d) Vorspannen des Filamentpolymermaterials bei Umgebungstemperaturen über dessen Elastizitätsgrenze hinaus und

(e) Vorheizen des vorgespannten Filamentpolymermaterials auf eine Temperatur von etwa 60 bis 100°C.

9. Verfahren nach Anspruch 8, in dem als faserbildendes, thermoplastisches, lineares, hochmolekulares Polymer Polycaprolactam verwendet wird.

10. Verfahren nach Anspruch 9, in welchem die Verweitzeit von 1 bis 5 sec. nach dem Ausrichten und vor dem Vorspannen mittels einer Lagerrolle bewirkt wird, die der Vorrichtung zur Anbringung der schmierenden Zusammensetzung nachgeordnet ist.

11. Verfahren nach einem der Ansprüche 4 oder 10, in dem das Schmelzspinnen bei einer Temperatur zwischen etwa 240 und 290°C durchgeführt wird, um einzelne schmelzgesponnene Filamente herzustellen, die ein Modifikationsverhältnis von 1 bis 4 aufweisen, bei einem Polymerdurchsatz von 0,1 bis 0,4 g/min×(texturiertes Dtex×Anzahl der angewandten Fadenlinien), die Filamente in Luft bei einer Temperatur von etwa 5 bis 25°C und einer relativen Feuchtigkeit von etwa 20 bis 90% abgeschreckt werden, wobei die Verweilzeit in dem Spinngang etwa 0,1 bis 1 sec. beträgt.

12. Verfahren nach einem der Ansprüche 4 oder 10, in welchem das Vorspannen im wesentlichen bei Umgebungsbedingungen durch Strecken des geschmierten Polycaprolactamfilaments zwischen etwa 1 und 5% von dessen Länge durchgeführt wird.

13. Verfahren nach Anspruch 12, in dem die geschmierten Polycaprolactamfilamente durch Strecken von etwa 1 bis 2% ihrer Länge vorgespannt werden.

14. Verfahren nach Anspruch 4, in dem das vorgespannte Filamentpolymermaterial dadurch gestreckt wird, daß

(a) sichergestellt wird, daß das Filamentpolymermaterial eine Temperatur zwischen etwa 35 und 70°C aufweist,

(b) das Filamentpolymermaterial in einer einzelnen Zone bei einem Streckverhältnis von etwa 1,5:4 gestreckt wird, gefolgt von

(c) Erhitzen des gestreckten Filamentpolymermaterials auf eine Temperatur zwischen etwa 120 und 200°C, wobei die Zeit zwischen dem Beenden des Schmiervorganges und dem Beenden des Streckvorganges zwischen etwa 0,1 und 2 sec. beträgt.

15. Verfahren nach Anspruch 10, in dem das vorgespannte Filamentpolymermaterial gestreckt wird durch:

(a) Sicherstellen, daß das Filamentpolymermaterial eine Temperatur von etwa 60 bis 100°C aufweist,

(b) Strecken des Filamentmaterials in einer einzigen Zone bei ienem Streckverhältnis von etwa 1,5 bis 4, gefolgt von

(c) Erhitzen des gestreckten Filamentpolymermaterials auf eine Temperatur von etwa 120 und 200°C, wobei die Verweilzeit zwischen dem Ende des Schmiervorganges und dem Ende des Streckvorganges etwa 1 bis 7 sec. beträgt.

16. Verfahren nach Anspruch 14, wobei das Filamentmaterial direkt vor dem Strecken eine Temperatur von etwa 40 bis 60°C aufweist.

17. Verfahren nach Anspruch 15, in dem das Filamentpolymermaterial direkt vor dem Strecken eine Temperatur von etwa 80 bis 100°C aufweist.

18. Verfahren nach einem der Ansprüche 16 oder 17, in dem das Filamentpolymermaterial in einer einzelnen Zone und einem Streckverhältnis zwischen 2,5 und 3,5 gestreckt wird.

10

**0 067 387**

19. Verfahren nach Anspruch 18, in dem das gestreckte Filamentpolymermaterial vor dem Texturieren auf eine Temperatur zwischen etwa 140 und 180°C erhitzt wird.

20. Verfahren nach einem der Ansprüche 4 oder 10, in dem das Texturieren durch eine Strömungs- oder Fluidjetvorrichtung bei einer Fluidtemperatur von etwa 200 bis 450°C bei einer Fluid/Gasströmungsrate von weniger als 15 Normalkubikmeter pro Stunde durchgeführt wird, wonach das texturierte Filamentpolymermaterial mittels eines Fluids oder eines Gases auf eine Temperatur von weniger als 50°C ohne Spannung abgekühlt wird, während die Filamente im wesentlichen im einem spannungslosen Zustand sind und dann in eine Packung zur anschließenden Verwendung gewickelt werden.

21. Verfahren nach Anspruch 20, in dem das Texturierungs- und Kühlfluid Luft ist.

22. Verfahren nach Anspruch 20, in dem die Fluidjetvorrichtung gleichzeitig das Texturieren und Vernetzen des Filamentpolymermaterials bewirkt.

23. Verfahren nach Anspruch 20, das zusätzlich Fluidjetvorrichtungen zur anschließenden Vernetzung des texturierten Filamentpolymermaterials umfaßt, nachdem diese auf eine Temperatur von weniger als 50°C ohne Einwirkung jeglicher Spannung abgekühlt wurden, wobei die Filamente im wesentlichen in einem spannungslosen Zustand sind.

24. Verfahren nach einem der Ansprüche 4 oder 10, in dem das Verfahren mit einer Mehrzahl von Fadenlinien durchgeführt wird, wobei jedes in die Texturierungsvorrichtung bei einer linearen Geschwindigkeit von über 2000 m pro Minute eintritt und in dem die einzelnen Fadenlinien auf ein Gewichts- zu Längenverhältnis von etwa 500 bis 3000 dtex aufweisen.

## Revendications

1. Procédé intégré de fabrication d'un fil texturé à multifilaments à partir d'un polymère de formation de fibres, thermoplastique, linéaire et de poids moléculaire élevé par la combinaison de la succession immédiate des étapes de procédé de filature par extrusion, d'étirage, de texturation et de bobinage, comprenant la combinaison coopérative des étapes de procédé suivantes avec celles de la filature par extrusion, de l'étirage, de la texturation et du bobinage: la lubrification de la matière polymère filamenteuse provenant de l'étape de filature par extrusion et le préchauffage de la matière polymère filamenteuse à une température comprise entre environ 30 et 100°C avant son étirage, caractérisé par l'application à la matière polymère filamenteuse provenant de l'étape de filature par extrusion une composition lubrifiante comprenant un lubrifiant et un solvant selon une quantité comprise entre 0 et 90% en poids de la composition lubrifiante et l'application d'une tension préalable au-delà de sa limite élastique à la matière polymère filamenteuse filée par extrusion et lubrifiée à une température comprise entre environ 20 et 60°C avant son étirage.

2. Le procédé de la revendication 1, caractérisé en ce que le solvant est de l'eau selon une quantité comprise entre 0 et 50% en poids de la composition lubrifiante et le chauffage de la matière polymère filamenteuse ayant été soumise à une tension préalable est réalisé à une température comprise entre environ 35 et 70°C avant l'étape d'étirage.

3. Le procédé de la revendication 2, caractérisé en ce que le polymère de formation de fibres, thermoplastique, linéaire et de poids moléculaire élevé est un polyamide.

4. Le procédé de la revendication 3, caractérisé en ce que le polyamide est du polycaprolactame.

5. Le procédé de la revendication 4, caractérisé en ce que la composition lubrifiante est appliquée de façon uniforme sur la largeur et sur la longueur de la matière polymère filamenteuse filée par extrusion de manière à obtenir un niveau compris entre 0,2 et 3% en poids de lubrifiant, rapporté au poids du polymère.

6. Le procédé de la revendication 4, caractérisé en ce que le lubrifiant est une substance choisie dans le groupe constitué par les alcools, les thiols, les acides et les phénols polyéthérifiés et l'eau est présente selon une quantité comprise entre 0,1 et 50% en poids de la composition lubrifiante.

7. Le procédé de la revendication 4, caractérisé en ce que le lubrifiant est une substance du groupe constitué par les alcools polyéthérifiés, les thiols polyéthérifiés, les acides polyéthérifiés, les phénols polyéthérifiés, les triglycérides végétaux, des produits d'addition polyéthérifiés, les esters naturels et synthétiques du glycérol et des agents antistatiques au phosphate, et l'eau est présente selon une quantité comprise entre 0,1 et 10% en poids de la composition lubrifiante.

8. Le procédé de la revendication 1, qui comprend les étapes de procédé coopératives suivantes:

(a) lubrification de la matière polymère filamenteuse provenant de l'étape de filature par extrusion en lui appliquant une composition lubrifiante comprenant (1) un lubrifiant et (2) de l'eau selon une quantité comprise entre environ 50 et 90% en poids de la composition lubrifiante;

(b) traction pour amener la matière polymère filamenteuse en ligne droite, cette traction étant en-dessous de sa limite élastique;

(c) soumission de la matière polymère filamenteuse tirée en ligne droite à une durée de séjour comprise entre environ 1 et 5 secondes;

(d) soumission à une tension préalable de la matière polymère filamenteuse aux températures ambiantes au-delà de sa limite élastique; et

(e) préchauffage de la matière polymère filamenteuse ayant été soumise à une tension préalable à une température comprise entre environ 60 et 100°C.

9. Le procédé de la revendication 8, caractérisé en ce que le polymère de formation de fibres, thermoplastique, linéaire et de poids moléculaire élevé est du polycaprolactame.

10. Le procédé de la revendication 9, caractérisé en ce que la durée de séjour qui est comprise entre environ 1 et 5 secondes à la suite de l'étape de tension pour l'amener en ligne droite et avant l'étape de l'application d'une tension préalable est réalisée au moyen d'un rouleau de stockage disposé en aval du moyen pour appliquer la composition lubrifiante.

11. Le procédé de la revendication 4 ou la revendication 10, caractérisé en ce que la filature par extrusion est réalisée à une température comprise entre environ 240 et 290°C, pour produire des filaments individuels filés par extrusion présentant un taux de modification compris entre 1 et 4, pour un débit de polymère de 0,1 à 0,4 g/min×(dtex texturé×nombre de lignes de filaments utilisées), les filaments étant refroidis à l'air à une température comprise entre environ 5 et 25°C et à un taux d'humidité relative comprise entre environ 20 et 90%, la durée de séjour dans le conduit de filature étant compris entre environ 0,1 et 1 seconde.

12. Le procédé de la revendication 4 ou de la revendication 10, caractérisé en ce que la mise sous tension préalable est réalisée essentiellement dans les conditions ambiantes en étirant les filaments de polycaprolactame lubrifiés entre environ 1 et 5% de leur longueur.

13. Le procédé de la revendication 12, caractérisé en ce que les filaments de polycaprolactame lubrifiés sont soumis à une tension préalable en les étirant entre environ 1 et 2% de leur longueur.

14. Le procédé de la revendication 4, caractérisé en ce que la matière polymère filamenteuse ayant été soumise à une tension préalable est étirée en:

(a) s'assurant que la matière polymère filamenteuse est à une température comprise entre environ 35 et 70°C;

(b) étirant la matière polymère filamenteuse dans une zone unique selon un taux d'étirage compris entre environ 1,5 et 4; suivi par

(c) le chauffage de la matière polymère filamenteuse étirée à une température comprise entre environ 120 et 200°C; caractérisé en ce que la durée écoulée entre la fin de l'étape de lubrification et la fin de l'étape d'étirage est comprise entre environ 0,1 et 2 secondes.

15. Le procédé de la revendication 10, caractérisé en ce que la matière polymère filamenteuse ayant été soumise à une tension préalable est étirée en:

(a) s'assurant que la matière polymère filamenteuse est à une température comprise entre environ 60 et 100°C;

(b) étirant la matière polymère filamenteuse dans une zone unique selon un taux d'étirage compris entre environ 1,5 et 4; suivi par

(c) le chauffage de la matière polymère filamenteuse étirée à une température comprise entre environ 120 et 200°C; caractérisé en ce que la durée écoulée entre la fin de l'étape de lubrification et la fin de l'étape d'étirage est comprise entre environ 1 et 7 secondes.

16. Le procédé de la revendication 14, caractérisé en ce que la matière polymère filamenteuse est à une température comprise entre environ 40 et 60°C immédiatement avant l'étirage.

17. Le procédé de la revendication 15, caractérisé en ce que la matière polymère filamenteuse est étirée à une température comprise entre environ 80 et 100°C immédiatement avant l'étirage.

18. Le procédé de la revendication 16 ou la revendication 17, caractérisé en ce que la matière polymère filamenteuse est étirée dans une zone unique selon un taux d'étirage compris entre 2,5 et 3,5.

19. Le procédé de la revendication 18, caractérisé en ce que la matière polymère filamenteuse étirée est chauffée à une température comprise entre environ 140 et 180°C avant la texturation.

20. Le procédé de la revendication 4 ou de la revendication 10, caractérisé en ce que la texturation est réalisée par un moyen à jet de fluide à une température du fluide comprise entre environ 200 et 450°C, en utilisant un débit du fluide inférieur à 15 m³ à l'heure; suite à quoi la matière polymère filamenteuse texturée est refroidie au moyen d'un fluide à une température inférieure à environ 50°C sans contraintes, alors que les filaments sont à l'état essentiellement sans tension, puis sont enroulés en une bobine en vue de leur utilisation subséquente.

21. Le procédé de la revendication 20, caractérisé en ce que les fluides de la texturation et du refroidissement sont de l'air.

22. Le procédé de la revendication 20, caractérisé en ce que le moyen à jet de fluide réalise simultanément la texturation et l'entrelacement de la matière polymère filamenteuse.

23. Le procédé de la revendication 20, qui comprend en outre des moyens à jet de fluide pour l'entrelaçage subséquent de la matière polymère filamenteuse texturée, après que son refroidissement à une température inférieure à environ 50°C ait été réalisé sans appliquer de contrainte alors que les filaments sont à l'état essentiellement sans tension.

24. Le procédé de la revendication 4 ou de la revendication 10, ce procédé étant réalisé avec un ensemble de lignes de filaments qui pénètrent chacune dans le dispositif de texturation à une vitesse linéaire supérieure à 2000 m/min., et caractérisé en ce que les lignes de filaments individuels présentent un rapport poids-longueur compris entre environ 500 et 3000 dtex.